# EUROPEAN PATENT SPECIFICATION

(11) **EP 4 075 998 B1**
(45) Date of publication and mention of the grant of the patent: **08.11.2023**
(21) Application number: 20828565.0
(22) Date of filing: 10.12.2020
(51) Int. Cl.: A23G 3/34, A23G 3/42, A23G 3/54

(54) **CONFECTIONERY PRODUCT WITH REDUCED AMOUNT OF SUGAR AND MANUFACTURING PROCESS THEREOF**
SÜSSWARE MIT REDUZIERTEM ZUCKERGEHALT UND VERFAHREN ZU IHRER HERSTELLUNG
PRODUIT DE CONFISERIE À TENEUR RÉDUITE EN SUCRE ET SON PROCÉDÉ DE FABRICATION

(30) Priority: 16.12.2019 NL 2024463
(43) Date of publication of application: 26.10.2022
(73) Proprietor: Perfetti Van Melle Benelux B.V., 4815 HK Breda (NL)
(72) Inventor: VLEUGELS, Tanja Catharina Jozefina, 4914TM Breda (NL); DE JONG, Petrus Henricus, 4834BD Breda (NL); BOTTINI, Alessandro, 20020 Lainate MI (IT)
(74) Representative: Nederlandsch Octrooibureau
(86) International application number: PCT/NL2020/050770
(87) International publication number: WO 2021/125941

(56) References cited:
- EP-A1- 1 104 652
- WO-A1-02/30214
- WO-A1-2019/055626

## Description

### FIELD

The invention relates to coated gelatine-free confectionery products having a chewy center containing gellan, having a reduced amount of sugar, and to a method for producing them.

### BACKGROUND

Chewy candies with a chewy center with a hard candy shell are known in the art.

WO 2006/083784 and WO 2008/091476 disclose a multilayer confectionary product having a chewy center including an ingestible dextrin, optionally gum arabic, a sweetener, water and flavour, an intermediate layer including a flavour and a sweetener which is at least partially crystalline and an outer shell which is a crunchy hard shell. The sweeteners may be sucrose and corn syrup.
Hydrocolloids are commonly used as gelling agent in a sugar/glucose syrup system.

One of the most common hydrocolloids used in sugar confectionery is gelatine used primarily as a gelling agent. Gelatine imparts to the chewy sugar confectionery an unique viscoelastic texture (referred to as e.g. springiness and resilience) especially desirable to consumers. The presence of gelatine improves the manufacturing process, providing a desirable viscosity to the semi-finished confectionery material, making easier to pump, extrude or convey the material along the different stages of the production. Moreover, gelatine has an emulsifying power which allows to homogenize fat with sugar, glucose syrup and residual moisture of chewy candies. However, gelatine is of animal origin.

Due to ethical, religious, dietary restrictions or due to a vegetarian diet, there is an increasing demand of products that are free from ingredients derived from animal sources. Thus, alternatives to gelatine have been sought to produce gelatine-free confectionary products with a gelatine-like texture.

Although the use of dextrin is reported by previous patent literature, the optimum balance of sugar/glucose syrup connected to the concomitant use of gellan and dextrin is not reported. WO 2006/083784 reports the use of from 6% to 10% indigestible dextrin in the chewy material, while indigestible dextrin is not reported to be added to the candy material, coating the chewy material. In this way the overall amount of indigestible dextrin added to the final product is limited. In fact, adding 10% dextrin to the chewy material, if the chewy material would account for 67,5% of the total candy center, and the center is coated to a 70/30 center/coating ration, would result in 10 x 0,675 x 0,7 = 4,7% only of indigestible dextrin in the final product. In WO2006/083784 the ratio sugar:glucose is reported to be 50:50 for the chewy material, while no information is reported for the hard candy material.

EP2117336 reports the same sugar:glucose ratio as reported in WO2006/083784 for the chewy material and a sugar:glucose ratio of 66:34 for the hard candy material without indigestible dextrin.

Gum arabic, reported in WO2006/083784, is a thickening and gelling agent of vegetable origin used in chewy confectionery and can be an alternative to gelatine. However, the geographical origin of gum arabic, which is produced in some African countries, makes the supply extremely variable year after year. Thus, it is also desirable to find alternatives to gum arabic as well as to gelatine.

WO2011/153229 discloses a dough-like confectionary material employed as layering or coating material which contain 70-98% of solid particulates of sugar, sugar alcohol or mixtures thereof and 0.1-20% of a diffusion controller which may be, among the others, gelatine or gellan. The diffusion controller used in the examples is xanthan gum.

WO02/30214 discloses gelatine-free gummy confections comprising gellan gum and a carrageenan. Carrageenan is added to the gelatine-free confectionery product because the gellan products "lack the gelatine-like texture due to their relatively low springiness and resiliency".

The products containing gellan gum present processing difficulties such as the collapse of the chewy center after forming due to viscosity, which is lower than the one characterizing the products made with gelatine and a reduction of water migration due to the hygroscopicity of gellan gum which reduces the water migration from the chewy center to the surrounding candy layer.

It has now been found that a chewy center based on sugar/glucose syrup and dextrin, wherein gelatine has been replaced by gellan gum preferably without the presence of gum arabic and other hydrocolloids has the desired properties of viscosity when the ratio sugar/glucose syrup is maintained in a specific range.

The multilayer confectionary products of the invention have, during processing, a chewy center coated by a surrounding at least partially amorphous candy layer with enough viscosity to be formed and optionally coated without collapsing.

Furthermore, a specific ratio sugar/glucose syrup and the addition of dextrin in the surrounding at least partially amorphous candy layer was surprisingly found to allow the surrounding candy layer to at least partially crystallize to obtain the desired texture when the product reaches the consumer.

To the contrary the ratio of sugar:glucose reported in prior art patents causes an unsatisfactory level of candies crystallization when dextrin was added according to the present invention.

It was also found that dextrin can be added to the total final candy to a much higher amount compared to disclosures in previous patents, when it is added in the chewy material and in the hard candy material as well.

### SUMMARY

An aspect of the invention relates to a confectionery product including a gelatine free chewy center comprising sucrose, glucose syrup, dextrin and gellan, a layer comprising amorphous candy material surrounding said chewy center, wherein the amorphous candy material comprises sucrose, glucose and dextrin, wherein the ratio sucrose/glucose syrup in the layer comprising amorphous candy material ranges from 70:30 to 99:1 on dry weight basis, and wherein the ratio sucrose/glucose syrup in the chewy center ranges from 70:30 to 99:1 on dry weight basis.

According to the invention the ratio sucrose/glucose syrup in the chewy center ranges from 70:30 to 99:1 on dry weight basis.

An embodiment is the confectionery product according to the invention, wherein the amount of gellan gum in the chewy center ranges from 0,02% to 1% by weight compared to the total weight of the chewy center.

An embodiment is the confectionery product according to the invention, wherein the moisture content in the chewy center ranges from 6% to 10% by weight compared to the total weight of the chewy center.

An embodiment is the confectionery product according to the invention, wherein the gelatine free chewy center does not contain gum Arabic.

An embodiment is the confectionery product according to the invention, wherein the layer comprising amorphous candy material comprises sugar, and dextrin.

According to the invention, the layer comprising amorphous candy material comprises glucose and ratio sucrose/glucose syrup in the layer of said at least partially amorphous candy material ranges from 70:30 to 99:1 on dry weight basis.

An embodiment is the confectionery product according to the invention, wherein the moisture content in the at least partially amorphous candy layer preferably ranges from 4% to 8% by weight compared to the total weight of the at least partially amorphous candy layer.

An embodiment is the confectionery product according to the invention, wherein the dextrin accounts for more than 10% of the chewy center.

An embodiment is the confectionery product according to the invention, wherein the dextrin accounts for from 15% to 70% of the chewy center.

An embodiment is the confectionery product according to the invention, wherein the dextrin accounts for more than 10% of the amorphous candy material.

An embodiment is the confectionery product according to the invention, wherein the dextrin accounts for from 15% to 70% of the amorphous candy material.

An embodiment is the confectionery product according to the invention, wherein said dextrin contains less than 5% of total mono and disaccharides.

An embodiment is the confectionery product according to the invention, wherein said chewy center contains sorbitol for more than 2% by weight of the chewy material.

An embodiment is the confectionery product according to the invention, wherein said chewy center contains glycerine from 0,04% to 5% by weight of the chewy material.

An embodiment is the confectionery product according to the invention, wherein said amorphous candy material contains sorbitol for more than 2% by weight of the chewy material.

An embodiment is the confectionery product according to the invention, wherein said amorphous candy material contains glycerine from 0,04% to 5% by weight of the chewy material.

An embodiment is the confectionery product according to the invention, wherein either the chewy center or the amorphous candy material does not contain flavour.

An embodiment is the confectionery product according to the invention, wherein the chewy center and the amorphous candy material do not contain flavour.

An embodiment is the confectionery product according to the invention additionally comprising at least one coating layer.

An embodiment is the confectionery product according to the invention, wherein the at least one coating layer is a hard or soft coating or a combination of hard and soft coating and contains dextrin.

An aspect of the invention relates to a method for manufacturing the confectionary product of the invention comprising the steps of:
a) providing a gelatine free chewy candy confectionery material comprising sucrose, glucose syrup, dextrin and gellan wherein the ratio sugar/glucose syrup ranges from 70:30 to 99:1 on dry weight basis; wherein at least 80% of the sucrose in the chewy candy confectionery material is in crystalline state;
b) providing a candy material comprising amorphous sucrose, glucose syrup and dextrin wherein the ratio sugar/glucose syrup ranges from 70:30 to 99:1on dry weight basis; wherein from 80% to 99.9% of the sucrose in the hard candy confectionery material is in amorphous form;
c) combining the chewy confectionery material and the candy material so that the candy material surrounds a core of chewy confectionery material:
d) allowing the amorphous sucrose of the candy material to at least partially crystallize.

An aspect not part of the invention relates to a method for manufacturing the confectionary product of the invention comprising the steps of:
a) providing a gelatine free chewy candy confectionery material comprising sugar, glucose syrup, dextrin and gellan wherein the ratio sugar/glucose syrup ranges from 70:30 to 100:0 on dry weight basis;
b) providing a candy material comprising at least partly amorphous sugar, glucose syrup and dextrin wherein the ratio sugar/glucose syrup ranges from 70:30 to 100:0 on dry weight basis
c) combining the chewy confectionery material and the candy material so that the candy material surrounds a core of chewy confectionery material:
d) allowing the amorphous sugar of the candy material to at least partially crystallize

### DETAILED DESCRIPTION

The present invention is defined by the claims.

Object of the present invention is a confectionery product including a gelatine free chewy center comprising sucrose, glucose syrup, dextrin and gellan, a layer comprising amorphous candy material surrounding said chewy center, wherein the amorphous candy material comprises sucrose, glucose and dextrin, wherein the ratio sucrose/glucose syrup in the layer comprising amorphous candy material ranges from 70:30 to 99:1 on dry weight basis, and wherein the ratio sucrose/glucose syrup in the chewy center ranges from 70:30 to 99:1 on dry weight basis.

The term "sugar" has its regular scientific meaning, and in the description and claims refers to sucrose.

In one embodiment, not part of the present invention, the glucose syrup is completely removed from the chewy center (ratio sugar:glucose syrup = 100:0).

The chewy center and the candy layer do not comprise gelatine and preferably do not comprise gum arabic or other hydrocolloids different from gellan.
Preferably the confectionery material has at least one additional coating layer surrounding the candy layer.

The preferred ratio sugar/glucose syrup in the chewy layer 80:20 to 90:10 on dry weight basis.

Gellan gum useful herein is or is derived from native gellan gum also referred as high acyl gellan.

Native gellan gum is a polymer produced by inoculating a carefully formulated fermentation medium with the microorganism Sphingamonas elodea (ATIC 31461). Methods disclosed e.g. in U.S. Patents 4,326,052 and 4,385,123. The outcome of the fermentation is a polysaccharide with a straight chain made of three monomers: glucose, rhamnose and glucuronic acid. The hydroxyl groups at C2 and C6 of glucose units can be esterified with acetyl and glyceryl groups. The native gellan polymer can be deacetylated to various extents (See Scheme I(a) and (b) for the native or high-acyl gellan gum and the low-acyl gellan gum, respectively). 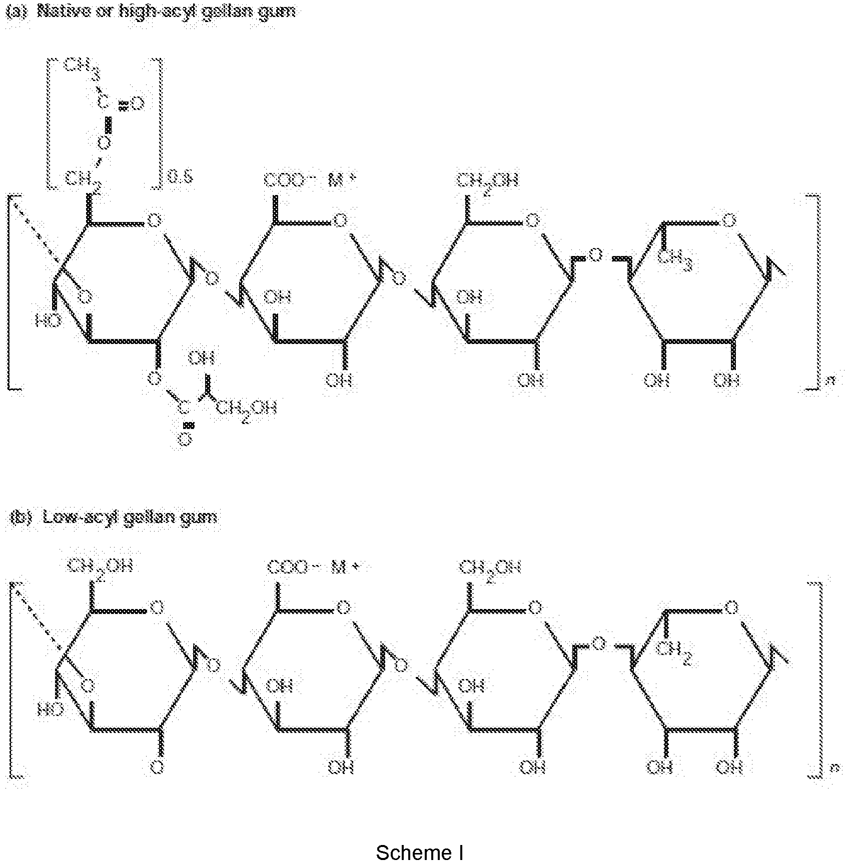 Gellan gum useful herein includes native gellan gum and any form derived therefrom and available, such as, but not limited to: non-clarified, clarified, and partially clarified native, deacetylated and partially deacetylated forms as well as mixtures thereof and the like.

Gellan gum is available from CP Kelco Company, 1313 North Market Street, Wilmington, Delaware 19894, USA .Typical brand names include KELCOGEL and GELRITE. KELCOGEL and GELRITE are trademarks of CP Kelco Company.
Particularly preferred is KELCOGEL F.

The amount of gellan gum in the chewy center preferably ranges from 0,02% to 1% by weight compared to the total weight of the chewy center, most preferably from 0,03% to 0,07% by weight compared to the total weight of the chewy center.

Preferably, the moisture content in the chewy center ranges from 6% to 10% by weight, most preferably from 7% to 9% by weight, compared to the total weight of the chewy center.

The chewy center may further contain flavours, fats, emulsifiers, colours, acids and authorized food additives in general as reported for example in Reg.1129/2011 of the European Union or in the Codex Alimentarius.

In one embodiment the fat is present from 1% to 12% by weight of the chewy candy material, preferably from 3% to 10% by weight of the chewy candy material, even more preferably from 4% to 8% by weight of the chewy candy material.
The amount of dextrin in the chewy candy material is preferably more than 10% by weight of the chewy candy material. In one embodiment amount of dextrin in the chewy candy material is from 15% to 70%, more preferably from 20% to 60% and even more preferably from 25% to 45% by weight of the chewy candy material.
Preferably the chewy candy material contains sorbitol.

The amount of sorbitol in the chewy candy material is preferably more than 2% by weight of the chewy candy material. In one embodiment amount of sorbitol in the chewy candy material is from 5% to 25%, more preferably from 10% to 20%.
Preferably the chewy candy material contains glycerine.
The amount of glycerine in the chewy candy material is preferably from 0,04% to 5%, more preferably from 0,5% to 5%.

In an embodiment, not part of the present invention, the chewy center material contains gellan gum, indigestible dextrins, sorbitol, glycerine, sugar and no glucose syrup.
In an alternative embodiment the chewy candy material does not contain flavour.

The surrounding candy layer of comprising amorphous candy material comprises sugar and glucose syrup.

The ratio sugar/glucose syrup in the surrounding comprising amorphous candy layer preferably ranges from 70:30 to 99:1 on dry weight basis
In one embodiment, not part of the present invention, the glucose syrup is completely removed from the amorphous candy material (ratio sugar:glucose syrup = 100:0).

The amount of dextrin in the amorphous candy material is preferably more than 10% by weight of the amorphous candy material. In one embodiment amount of dextrin in the amorphous candy material is from 15% to 70%, more preferably from 20% to 60% and even more preferably from 25% to 45% by weight of the amorphous candy material.

Preferably the amorphous candy material contains sorbitol.

The amount of sorbitol in the amorphous candy material is preferably more than 2% by weight of the amorphous candy material. In one embodiment amount of sorbitol in the amorphous candy material is from 5% to 25%, more preferably from 10% to 20%.

Preferably the amorphous candy material contains glycerine.
The amount of glycerine in the amorphous candy material is preferably from 0,04% to 5%, more preferably from 0,5% to 5%.
In an embodiment, not part of the present invention, the amorphous candy material contains indigestible dextrins, sorbitol, glycerine, sugar and no glucose syrup.
In an alternative embodiment the amorphous candy material does not contain flavour.

The moisture content in the in the surrounding at least partially amorphous candy layer preferably ranges from 4% to 8% and more preferably from 4,5% to 7% by weight, compared to the weight of the surrounding at least partially amorphous candy layer.
The surrounding at least partially amorphous candy layer may further contain flavour, fats, emulsifiers, colors, acids and authorized food additives in general as reported for example in Reg.1129/2011 of the European Union or in the Codex Alimentarius.

The sugar used in the chewy material and in the surrounding at least partially amorphous candy layer is preferably selected from refined sugar with ICUMSA grade <50, preferably ≤30.

The glucose syrup used in the chewy material and in the surrounding candy layer is preferably characterized by a content of mono and disaccharides ranging from 25% and 35% by weight, most preferably from 28% to 34% by weight, on dry weight basis.

Glucose syrup preferably contains at least 19% by weight, most preferably from 20% to 28% by weight, of oligosaccharides having a DP index (degree of polymerization) greater than 9, compared to the total weight of glucose syrup on dry weight basis.

Alternatively, the glucose syrup is high maltose glucose syrup, preferably containing total mono and disaccharides from 40% to 70%. The high maltose syrup preferably employed in the invention contains >50% total mono and disaccharides.

Sugar reduced formula are defined as formula where the amount of the total mono and disaccharides has been lowered by at least 25% compared to the parent formula by the addition of a suitable ingredient, which substitutes part of the sugar, glucose syrup or other ingredients containing mono and disaccharides present in the original formula.
All type of dextrin can be used in the present invention.

The dextrin in a first embodiment is derived from maize starch through controlled enzymatic hydrolysis. It is a blend of polysaccharides containing less than 5% total mono and disaccharides, preferably less than 3% total mono and disaccharides and even more preferably less than 1,5% total mono and disaccharides.

In a second embodiment the dextrin employed in the invention is produced by hydrolysed starch via heat treatment with acids. It is a blend of polysaccharides with branched chains containing less than 5% total mono and disaccharides, preferably less than 3% total mono and disaccharides and even more preferably less than 1,5% and even less than 1% total mono and disaccharides.

Dextrin containing the specified low amounts of mono and disaccharides are particularly suited to be introduced in sugar reduced formula.

The dextrin present in the present invention can be a resistant dextrin. Resistant maltodextrin presents some branching in the polymeric structure that make them resistant to digestion.

Common dextrin and resistant dextrin may be used alone and in combination in the present invention.

Dextrin can be used in the chewy center material, in the hard candy material and also in part of the coating.

The coating layer may be a hard or soft coating or a combination of hard and soft coating.

The coating layer may have known composition and can be manufactured according to known methods as reported in E.B. Jackson, Sugar confectionery manufacture, 2nd Edition, Aspen Publishers Inc, Geithersburg, Maryland (1999) or J.A. Merl and K.W. Stock, Silesia Confiserie Manual No 4, Silesia Gerhard Hanke KG, Abt. Fachbucherei, Neuss - Germany (1996).

Preferably the coating layer contains sugar, glucose, flavors, natural or artificial colours, thickeners (referred also as binding agents, e.g. starch), quick coat, fats, emulsifiers and additives in general. Preferably the coating does not contain titanium dioxide.

In some embodiments dextrins are present for more than 5%, preferably more than 20% and even more preferably more than 30% in weight of the dry coating material.

Alternatively dextrins can be present from 2% to 40%, preferably from 3% to 30% and even more preferably from 5% to 20% in weight of the dry coating material.

The confectionary products of the invention may be produced by a method comprising the steps of :
a) providing a gelatine free chewy candy confectionery material comprising sucrose, glucose syrup, dextrin and gellan wherein the ratio sucrose/glucose syrup ranges from 70:30 to 99:1 on dry weight basis, wherein at least 80% of the sucrose in the chewy candy confectionery material is in crystalline state;
b) providing a candy confectionery material comprising amorphous sucrose, glucose syrup and dextrin wherein the ratio sucrose/glucose syrup ranges from 70:30 to 99:1 on dry weight basis, wherein from 80% to 99.9% of the sucrose in the hard candy confectionery material is in amorphous form;
c) combining the chewy confectionery material and the candy material so that the candy material surrounds a core of confectionery material;
d) allowing the amorphous sucrose of the candy material to at least partially crystallize.

The chewy candy confectionery material provided at the phase a) can be prepared by sucrose, glucose syrup, dextrin and water which are combined in the preferred ratios and cooked under vacuum to the preferred water content. Gellan can be added as a solution after cooking. In a preferred embodiment a gellan solution is added to the sugar, glucose syrup, dextrin and water mix before cooking. It has been surprisingly found that when gellan replaces gelatine, the vacuum cooked mass generates less foam. This translates in higher efficiency, allowing the cooker to work continuously more than 72h and even more than 100h vs 24h of continuous operation with gelatine containing formula.

Emulsifiers and fats are added before or after cooking. Preferably the chewy mass is lecithin free and sucrose esters of fatty acids are preferred emulsifiers. It has been surprisingly found that sucrose esters of fatty acids speed up the sugar crystal formation in the chewy mass, reducing the time needed for pulling.

Sucrose esters of fatty acids may be added to the amorphous candy material.

The cooked mass is preferably pulled, seeded with powdered sugar or previously crystallized chewy mass. Flavours, colours, acids are added in the pulling machines or in in line mixers or at the moment of the extrusion. The chewy mass completed with previously mentioned ingredients is combined with the hard candy mass.

The mass of candy confectionery material is prepared by mixing sucrose, glucose syrup, dextrin and water and cooked under vacuum according to known methods to the target residual moisture.

After cooking the candy mass is added with flavours, colours and other additives. In a preferred embodiment, the boiled mass of candy confectionery material is added with powdered sugar.

Both the candy confectionery material and the chewy candy material are cooled and transported to a combining unit, like a extrusion machine or a batch roller machine, or any suitable means known to the technician used to prepare a rope of concentrically combined materials, wherein the inner part is made by the chewy confectionery material comprising at least partially crystallized sugar and the outer part, surrounding said chewy confectionery material, is made by hard candy confectionery material comprising at least partly amorphous sugar.

In one preferred embodiment, at this stage the chewy candy confectionery material comprises sugar in crystalline state for more than 80%, preferably more than 90%, or even more than 95% over the total sugar of the chewy candy material. At the same time the hard candy confectionery material comprises sugar in amorphous form from 80% to 99,9% of the sugar present in the hard candy confectionery material, preferably from 95% to 99,5% of the sugar present in the hard candy confectionery material.

The rope of combined confectionery material is reduced to the desired diameter in a rope sizer comprising at least two couples sizing wheels, preferably at least four couples of sizing wheels, and then reduced to singles pieces by any suitable means, comprising die forming, stamping, cutting, ball forming.

The single pieces of combined candy material are cooled in cooling tunnel.

The resulting candies have an outer hard layer of at least partially amorphous candy and an inner core of chewy material and can be then packed and sold after a suitable time to allow the amorphous sugar to crystallize.

Alternatively, the candies can be polished, dusted or coated in a coating pan.

Any type of coating is possible, comprised chocolate coating, compound coating, hard coating, soft coating, sanding, dusting and silvering.

One or more coatings can be combined together and a final polishing layer can be included to add shine and lustre to the candies.

In a preferred embodiment coating operations are started from few minutes to 24h after candy forming.

The coated candies are packed and sold after a suitable time to allow the amorphous sugar to crystallize. In a preferred embodiment the amorphous sugar of the candy material is induced to at least partially crystallize in controlled conditions.

It has been surprisingly found that controlling the conditions allows the crystallization of the amorphous sugar originally present in the hard candy confectionery material of ≥ 80%, preferably ≥ 90% in percentage of the sugar present in the originally hard candy material.

It has also been surprisingly discovered that the addition of dextrin at the specified amounts do not impair sugar crystallization when the ratio of sugar:glucose is as reported.

### Examples 1-5: Preparation of the chewy material for the manufacture of the chewy center

The ingredients were weighed and combined according to the method reported in Example 1 of EP2117336B1**.**

The compositions of the chewy centers and the evaluation of the obtained product are reported in the following Tables 1-5.

### Example 1 (comparative -Arabic gum based recipe, gelatine free, according to EP2117336B1 - example 2)

**Table 1**

| **Ingredient** | **Solid s %** | **Wet weight %** | **Dry weight (Kg)** | **Final chewy material weight %** | **Sugar/Glucos e ratio (dry basis)** |
|---|---|---|---|---|---|
| Sugar | 100 | 33 | 33 | 37,35 | 55 |
| Glucose Syrup | 80 | 33 | 27,06 | 30,63 | 45 |
| Water | 0 | 11 | 0 | | |
| Dextrin | 100 | 6 | 6 | 6,79 | |
| Water | 0 | 2 | 0 | | |
| Gum Arabic | 100 | 2 | 2 | 2,26 | |
| Gelatine | 100 | | | | |
| Gellan | 100 | | | | |
| Fat - Hydrogenated Palm Kernel Oil | 100 | 8 | 8 | 9,06 | |
| Fat - Fractionated oil | 100 | | | | |
| Gliceride | 100 | 0,2 | 0,2 | 0,23 | |
| Lecithin | 100 | 0,2 | 0,2 | 0,23 | |
| Sucrose esters | 100 | | | | |
| Powder Sugar | 100 | 5 | 5 | 5,66 | |
| Rework | 93 | | | | |
| Flavor | 100 | 0,7 | 0,7 | 0,79 | |
| Residual water | | | | 7,00 | |
| Total | | 101,1 | 82,16 | 100,00 | |
| Evaluation: The obtained chewy material is a consistent dough, fully grained, with some fat sweating and some gum arabic flavor. | | | | | |

### Example 2 (comparative- gelatine based recipe)

**Table 2**

| **Ingredient** | **Solids %** | **Wet weight (Kg)** | **Dry weight (kg)** | **Final chewy material weight %** | **Sugar/Glucose ratio (dry basis)** |
|---|---|---|---|---|---|
| Sugar | 100 | 10,6 | 10,6 | 48,02 | 55 |
| Glucose Syrup | 80 | 10,6 | 8,7 | 39,38 | 45 |
| Water | 0 | 2,8 | | | |
| Dextrin | 100 | | | | |
| Water | 0 | 1 | | | |
| Gum Arabic | 100 | | | | |
| Gelatine | 100 | 0,01 | 0,01 | 0,05 | |
| Gellan | 100 | | | | |
| Fat - Hydrogenated | 100 | 1 | 1 | 4,53 | |
| Palm Kernel Oil | 100 | | | | |
| Fat - Fractionated oil | 100 | | | | |
| Gliceride | 100 | | | | |
| Lecithin | 100 | 0,01 | 0,01 | 0,05 | |
| Sucrose esters | 100 | | | | |
| Powder Sugar | 93 | 0,2 | 0,186 | 0,84 | |
| Rework | 100 | 0,03 | 0,03 | 0,14 | |
| Flavor | | | | 7,00 | |
| Residual water | | | | | |
| Total | | 26,25 | 20,51 | 100,00 | |
| Evaluation: | | | | | |
| The obtained chewy material is a consistent dough, fully grained. It can be easily transported and joined to the candy material | | | | | |

### Example 3: gellan based recipe- preferred range of sugar/glucose ratio

**Table 3**

| **Ingredient** | **solids %** | **Wet weight (Kg)** | **Dry weight (kg)** | **Final chewy material %** | **Sugar/Glucose ratio (dry basis)** |
|---|---|---|---|---|---|
| Sugar | 100 | 16,00 | 16,00 | 48,60 | 85 |
| Glucose Syrup | 82 | 3,50 | 2,87 | 8,72 | 15 |
| Water | 0 | 5,00 | | | |
| Dextrin | 100 | 10,00 | 10,00 | 30,37 | |
| Water | 0 | | | | |
| Gum Arabic | 100 | | | | |
| Gelatine | 100 | | | | |
| Gellan | 100 | 0,01 | 0,01 | 0,04 | |
| Fat - Hydrogenated Palm Kernel Oil | 100 | | | | |
| Fat - Fractionated oil | 100 | 1,65 | 1,65 | 5,01 | |
| Gliceride | 100 | | | | |
| Lecithin | 100 | | | | |
| Sucrose esters | 100 | 0,01 | 0,01 | 0,04 | |
| Powder Sugar | 100 | | | | |
| Rework | 93 | | | | |
| Flavor | 100 | 0,07 | 0,07 | 0,21 | |
| Residual water | | | | 7 | |
| Total | | 36,248 | 30,6 | 100,0 | |
| Evaluation: | | | | | |
| The obtained chewy material is a consistent dough, fully grained. It can be easily transported and joined to the candy material | | | | | |

### Example 4- gellan based recipe- high end value of the range of sugar/glucose ratio

**Table 4**

| **Ingredient** | **solids %** | **Wet Weight (Kg)** | **Dry weight (kg)** | **Final chewy material %** | **Sugar/Glucose ratio (dry basis)** |
|---|---|---|---|---|---|
| Sugar | 100 | 19,50 | 19,50 | 58,04 | 100 |
| Glucose Syrup | 82 | 0,00 | 0,00 | 0,00 | 0 |
| Water | 0 | 5,00 | | | |
| Dextrin | 100 | 10,00 | 10,00 | 29,76 | |
| Water | 0 | | | | |
| Gum Arabic | 100 | | | | |
| Gelatine | 100 | | | | |
| Gellan | 100 | 0,01 | 0,01 | 0,04 | |
| Fat - Hydrogenated Palm Kernel Oil | 100 | | | | |
| Fat - Fractionated oil | 100 | 1,65 | 1,65 | 4,91 | |
| Gliceride | 100 | | | | |
| Lecithin | 100 | | | | |
| Sucrose esters | 100 | 0,01 | 0,01 | 0,04 | |
| Powder Sugar | 100 | | | | |
| Rework | 93 | | | | |
| Flavor | 100 | 0,07 | 0,07 | 0,21 | |
| Residual water | | | | 7 | |
| Total | | 36,248 | 31,2 | 100,0 | |
| Evaluation: The obtained chewy material is a consistent dough, fully grained. It can be easily transported and joined to the candy material | | | | | |

### Example 5- gellan based recipe- low end value of the range of sugar/glucose ratio

**Table 5**

| **Ingredient** | **solids %** | **Wet weight (Kg)** | **Dry weight (kg)** | **Final chewy material %** | **Sugar/Glucose ratio (dry basis)** |
|---|---|---|---|---|---|
| Sugar | 100 | 13,00 | 13,00 | 40,20 | 71 |
| Glucose Syrup | 82 | 6,50 | 5,33 | 16,48 | 29 |
| Water | 0 | 5,00 | | | |
| Dextrin | 100 | 10,00 | 10,00 | 30,92 | |
| Water | 0 | | | | |
| Gum Arabic | 100 | | | | |
| Gelatine | 100 | | | | |
| Gellan | 100 | 0,01 | 0,01 | 0,04 | |
| Fat - Hydrogenated Palm Kernel Oil | 100 | | | | |
| Fat - Fractionated oil | 100 | 1,65 | 1,65 | 5,10 | |
| Gliceride | 100 | | | | |
| Lecithin | 100 | | | | |
| Sucrose esters | 100 | 0,01 | 0,01 | 0,04 | |
| Powder Sugar | 100 | | | | |
| Rework | 93 | | | | |
| Flavor | 100 | 0,07 | 0,07 | 0,22 | |
| Residual water | | | | 7 | |
| Total | | 33,248 | 25,5 | 100,0 | |
| Evaluation: | | | | | |
| The obtained chewy material is an acceptable dough, fully grained, although softer than examples 3 and 4. It can be easily transported and joined to the candy material | | | | | |

### Examples 6-10: Candy material for the manufacture of the candy layer

Candy material is prepared according to the method of Example 1 of EP2117336B1**,** weighing the ingredients except powder sugar and boiling under vacuum till reaching the desired residual water. The obtained liquid mass is combined after cooking with the powder sugar and cooled to a plastic pliable mass.

The compositions of the candy layer and the evaluation of the obtained product are reported in the following Tables 6-10.

### Example 6 (comparative according to EP2117336B1 - example 2)

**Table 6**

| **Ingredient** | **Solid s %** | **Wet weight** | **Dry weight (Kg)** | **Final candy material %** | **Sugar/Glucose ratio (dry basis))** |
|---|---|---|---|---|---|
| Sugar 100 | 100 | 57 | 57 | 66,25 | 70 |
| Glucose Syrup 82 | 82 | 30 | 24,6 | 28,59 | 30 |
| Water 0 | 0 | 12 | | | |
| Powder Sugar 100 | 100 | | | | |
| Flavor 100 | 100 | 1 | 1 | 1,16 | |
| Residual water 5 | | | | 4,00 | |
| Total | | 100 | 82,6 | 100,00 | |
| Evaluation: The obtained candy material is a consistent dough, fully glassy, with poor plasticity and some tendency to break even when warm. | | | | | |

### Example 7- comparative without dextrin range of sugar/glucose ratio

**Table 7**

| **Ingredient** | **Solids %** | **Wet weight (Kg)** | **Dry weight (kg)** | **Final candy material %** | **Sugar/Glucose ratio (dry)** |
|---|---|---|---|---|---|
| Sugar | 100 | 49 | 49,00 | 50,67 | 54 |
| Glucose Syrup | 82 | 51 | 41,82 | 43,24 | 46 |
| Water | 0 | | | | |
| Powder Sugar | 100 | 1,88 | 1,88 | 1,94 | |
| Flavor | 100 | 0,14 | 0,14 | 0,14 | |
| Residual water | | | | 4,00 | |
| Total | | 102,02 | 92,84 | 100,00 | |
| Evaluation: | | | | | |
| The obtained candy material is a consistent dough, fully amorphous except for the powder sugar part. | | | | | |

### Example 8- preferred range of sugar/glucose ratio

**Table 8**

| **Ingredient** | **Solids %** | **Wet weight (Kg)** | **Dry weight (kg)** | **Final candy material %** | **Sugar/Glucose ratio (dry)** |
|---|---|---|---|---|---|
| Sugar | 100 | 11,00 | 11,00 | 45,71 | 87 |
| Glucose Syrup | 82 | 2,00 | 1,64 | 6,81 | 13 |
| Dextrin | 100 | 10,00 | 10,00 | 41,55 | |
| Water | 0 | 3,23 | | 0,00 | |
| Powder Sugar | 100 | 0,43 | 0,43 | 1,79 | |
| Flavor | 100 | 0,03 | 0,03 | 0,13 | |
| Residual water | | | | 4 | |
| Total | | 26,69 | 23,10 | 100,00 | |
| Evaluation: The obtained candy material is a consistent dough, fully amorphous except for the powder sugar part. | | | | | |

### Example 9- high end of preferred range of sugar/glucose ratio

**Table 9**

| **Ingredient** | **Solids %** | **Wet weight (Kg)** | **Dry weight (kg)** | **Final candy material %** | **Sugar/Glucose ratio (dry)** |
|---|---|---|---|---|---|
| Sugar | 100 | 13,00 | 13,00 | 53,19 | 100 |
| Glucose Syrup | 82 | 0,00 | 0,00 | 0,00 | 0 |
| Dextrin | 100 | 10,00 | 10,00 | 40,92 | |
| Water | 0 | 3,23 | | | |
| Powder Sugar | 100 | 0,43 | 0,43 | 1,76 | |
| Flavor | 100 | 0,03 | 0,03 | 0,13 | |
| Residual water | | | | 4 | |
| Total | | 26,69 | 23,46 | 100,00 | |
| Evaluation: | | | | | |
| The obtained candy material is a consistent dough, fully amorphous except for the powder sugar part. | | | | | |

### Example 10- low end of preferred range of sugar/glucose ratio

**Table 10**

| **Ingredient** | **Solids %** | **Wet weight (Kg)** | **Dry weight (kg)** | **Final candy material %** | **Sugar/Glucose ratio (dry)** |
|---|---|---|---|---|---|
| Sugar | 100 | 9,00 | 9,00 | 37,99 | 73 |
| Glucose Syrup | 82 | 4,00 | 3,28 | 13,85 | 27 |
| Dextrin | 100 | 10,00 | 10,00 | 42,21 | |
| Water | 0 | 3,23 | | | |
| Powder Sugar | 100 | 0,43 | 0,43 | 1,82 | |
| Flavor | 100 | 0,03 | 0,03 | 0,14 | |
| Residual water | | | | 4 | |
| Total | | 26,69 | 22,74 | 100,00 | |
| Evaluation: | | | | | |
| The obtained candy material is a consistent dough, although softer than examples 8 and 9, fully amorphous except for the powder sugar part | | | | | |

### Examples 11-15: Preparation of candies with a chewy layer and a candy layer

The chewy material and the candy material obtained in the previous examples were combined and formed according to known methods to form centers with two concentric layers, an inner core of chewy material surrounded by a layer of candy material. Suitable methods are reported in WO00/06127. The percentages of the chewy material and candy material are reported in the following Table 11. While the candy material is still amorphous the centers are coated with a sugar based hard coating according to known methods. The candies were kept in controlled conditions for 14 days and then evaluated organoleptically by a panel of trained judges, reporting the overall comment registered after each example.

**TABLE 11**

| | | Ex. 11 (comparative) | Ex. 12 (comparative) | Ex. 13 | Ex. 14 | Ex. 15 |
|---|---|---|---|---|---|---|
| Material | Sugar/Glucose ratio (dry basis) | % | % | % | % | % |
| Chewy material- Ex.1 (comparative- EP21173336B1) | 55/45 | 60 | | | | |
| Chewy material- Ex.2 (comparative-gelatine based recipe) | 54/46 | | 40 | | | |
| Chewy material- Ex.3 (preferred range of sugar/glucose ratio) | 85/15 | | | 40 | | |
| Chewy material- Ex.4 (high end of the range of sugar/glucose ratio) | 100/00 | | | | 40 | |
| Chewy material -Ex.5 (low end of the range of sugar/glucose ratio) | 71/29 | | | | | 40 |
| Candy material- Ex.6 (comparative- EP21173336B1) | 70/30 | 40 | | | | |
| Candy material- Ex.7 (comparative without dextrin) | 54/46 | | 60 | | | |
| Candy material- Ex.8 (preferred range of sugar/glucose ratio) | 87/13 | | | 60 | | |
| Candy material- Ex.9 (high end of preferred sugar/glucose ratio) | 100/00 | | | | 60 | |
| Candy material- Ex.10 (low end of preferred sugar/glucose ratio) | 73/27 | | | | | 60 |
| | Total | 100 | 100 | 100 | 100 | 100 |
| Hard coating | Overweight % | 30 | 30 | 30 | 30 | 30 |
| Evaluation | | | | | | |
| Average crack (1-10) | | 7 | 8 | 8 | 9 | 8 |
| Average softness first bite (1-10) | | 5 | 7 | 7 | 8 | 6 |
| Average chew experience (1-10) | | 6 | 8 | 8 | 7 | 7 |

### Overall evaluation:

Example 11 (comparative): Candies with acceptable quality, some portion of the candy material is soft as reported in EP2117336B1.

Example 12 (comparative): Candies with very good quality, better than Example 11 , all the candy material is soft and crystallized. Chewiness is consistent without breaking of the center in pieces. Good crack of the coating part.

Example 13: Candies with very good quality, non distinguishable from those of Ex.12, better than those of Ex.11 , all the candy material is soft and crystallized. Chewiness is consistent without breaking of the center in pieces. Good crack of the coating part.

Example 14: Candies with good quality, the candy material is soft and crystallized. Nice first bite. Chewiness tend to be a bit plastic. Very good crack of the coating part.

Example 15: Candies with acceptable quality, some portion of the candy material is soft similarly to EP2117336B1. Chewiness is difficult to evaluate due to tendency to stick to the teeth. Good crack of the coating part.

## Claims

1. A confectionery product including a gelatine-free chewy center comprising sucrose, glucose syrup, dextrin and gellan, a layer comprising amorphous candy material surrounding said chewy center, wherein the amorphous candy material comprises sucrose, glucose and dextrin, wherein the ratio sucrose/glucose syrup in the layer comprising amorphous candy material ranges from 70:30 to 99:1 on dry weight basis, and wherein the ratio sucrose/glucose syrup in the chewy center ranges from 70:30 to 99:1 on dry weight basis.

2. The confectionery product according to claim 1 wherein the amount of gellan gum in the chewy center ranges from 0,02% to 1% by weight compared to the total weight of the chewy center.

3. The confectionary product according to anyone of the preceding claims wherein the moisture content in the chewy center ranges from 6% to 10% by weight compared to the total weight of the chewy center.

4. The confectionary product according to anyone of the preceding claims wherein the gelatine free chewy center does not contain gum Arabic.

5. The confectionary product according to anyone of the preceding claims wherein the moisture content in the partially amorphous candy layer preferably ranges from 4% to 8% by weight compared to the total weight of the amorphous candy layer.

6. The confectionary product according to anyone of the preceding claims wherein the dextrin accounts for more than 10% of the chewy center.

7. The confectionary product according to anyone of the preceding claims wherein the dextrin accounts for from 15% to 70% of the chewy center.

8. The confectionary product according to anyone of the preceding claims wherein the dextrin accounts for more than 10% of the amorphous candy material.

9. The confectionary product according to anyone of the preceding claims wherein the dextrin accounts for from 15% to 70% of the amorphous candy material.

10. The confectionery product according to anyone of the preceding claims wherein said dextrin contains less than 5% of total mono and disaccharides.

11. The confectionery product of claims 1-4, 6-7wherein said chewy center contains sorbitol for more than 2% by weight of the chewy material.

12. The confectionery product of claims 1-4, 6-7 wherein said chewy center contains glycerine from 0,04% to 5% by weight of the chewy material.

13. The confectionery product of claims 1 or 5wherein said amorphous candy material contains sorbitol for more than 2% by weight of the chewy material.

14. The confectionery product of claim 5 wherein said amorphous candy material contains glycerine from 0,04% to 5% by weight of the chewy material.

15. The confectionery product of claims 1-14 wherein either the chewy center or the amorphous candy material does not contain flavour.

16. The confectionery product of claims 1-14 wherein the chewy center and the amorphous candy material do not contain flavour.

17. The confectionery product according to anyone of the preceding claims additionally comprising at least one coating layer.

18. The confectionary product according to anyone of the preceding claims wherein the at least one coating layer is a hard or soft coating or a combination of hard and soft coating and contains dextrin.

19. A method for manufacturing the confectionary product as defined in claim 1 comprising the steps of:
a) providing a gelatine free chewy candy confectionery material comprising sucrose, glucose syrup, dextrin and gellan wherein the ratio sucrose/glucose syrup ranges from 70:30 to 99:1 on dry weight basis, wherein at least 80% of the sucrose in the chewy candy confectionery material is in crystalline state;
b) providing a candy material comprising amorphous sucrose, glucose syrup and dextrin wherein the ratio sucrose/glucose syrup ranges from 70:30 to 99:1 on dry weight basis, wherein from 80% to 99.9% of the sucrose in the hard candy confectionery material is in amorphous form
c) combining the chewy confectionery material and the candy material so that the candy material surrounds a core of chewy confectionery material:
d) allowing the amorphous sucrose of the candy material to at least partially crystallize.

## Patentansprüche

1. Süßwarenprodukt, das ein gelatinefreies Kauzentrum enthält, das Saccharose, Glukosesirup, Dextrin und Gellan umfasst, wobei eine Schicht amorphes Süßigkeitsmaterial umfasst, das das besagte Kauzentrum umgibt, wobei das amorphe Süßigkeitsmaterial Saccharose, Glukose und Dextrin umfasst, wobei das Verhältnis Saccharose/Glukosesirup in der Schicht, die das amorphe Süßigkeitsmaterial umfasst, im Bereich von 70:30 bis 99:1 auf Trockengewichtsbasis liegt, und wobei das Verhältnis Saccharose/Glukosesirup in dem Kauzentrum im Bereich von 70:30 bis 99:1 auf Trockengewichtsbasis liegt.

2. Süßwarenprodukt nach Anspruch 1, wobei die Menge an Gellangummi in dem Kauzentrum im Bereich von 0,02 Gew.-% bis 1 Gew.-% bezogen auf das Gesamtgewicht des Kauzentrums liegt.

3. Süßwarenprodukt nach einem der vorhergehenden Ansprüche, wobei der Feuchtigkeitsgehalt in dem Kauzentrum im Bereich von 6 Gew.-% bis 10 Gew.-% bezogen auf das Gesamtgewicht des Kauzentrums liegt.

4. Süßwarenprodukt nach einem der vorhergehenden Ansprüche, wobei das gelatinefreie Kauzentrum kein Gummiarabikum enthält.

5. Süßwarenprodukt nach einem der vorhergehenden Ansprüche, wobei der Feuchtigkeitsgehalt in der teilweise amorphen Süßigkeitsschicht vorzugsweise im Bereich von 4 Gew.-% bis 8 Gew.-% bezogen auf das Gesamtgewicht der amorphen Süßigkeitsschicht liegt.

6. Süßwarenprodukt nach einem der vorhergehenden Ansprüche, wobei das Dextrin mehr als 10 % des Kauzentrums ausmacht.

7. Süßwarenprodukt nach einem der vorhergehenden Ansprüche, wobei das Dextrin 15 % bis 70 % des Kauzentrums ausmacht.

8. Süßwarenprodukt nach einem der vorhergehenden Ansprüche, wobei das Dextrin mehr als 10 % des amorphen Süßigkeitsmaterials ausmacht.

9. Süßwarenprodukt nach einem der vorhergehenden Ansprüche, wobei das Dextrin 15 % bis 70 % des amorphen Süßigkeitsmaterials ausmacht.

10. Süßwarenprodukt nach einem der vorhergehenden Ansprüche, wobei das besagte Dextrin weniger als 5 % der gesamten Mono- und Disaccharide enthält.

11. Süßwarenprodukt nach den Ansprüchen 1-4, 6-7, wobei das besagte Kauzentrum Sorbit von mehr als 2 Gew.-% des Kaumaterials enthält.

12. Süßwarenprodukt nach den Ansprüchen 1-4, 6-7, wobei das besagte Kauzentrum Glyzerin von 0,04 Gew.-% bis 5 Gew.-% des Kaumaterials enthält.

13. Süßwarenprodukt nach den Ansprüchen 1 oder 5, wobei das besagte amorphe Süßigkeitsmaterial Sorbit von mehr als 2 Gew.-% des Kaumaterials enthält.

14. Süßwarenprodukt nach Anspruch 5, wobei das besagte amorphe Süßigkeitsmaterial Glyzerin von 0,04 Gew.-% bis 5 Gew.-% des Kaumaterials enthält.

15. Süßwarenprodukt nach den Ansprüchen 1-14, wobei entweder das Kauzentrum oder das amorphe Süßigkeitsmaterial kein Aroma enthält.

16. Süßwarenprodukt nach den Ansprüchen 1-14, wobei das Kauzentrum und das amorphe Süßigkeitsmaterial kein Aroma enthalten.

17. Süßwarenprodukt nach einem der vorhergehenden Ansprüche, das zusätzlich mindestens eine Überzugsschicht umfasst.

18. Süßwarenprodukt nach einem der vorhergehenden Ansprüche, wobei die mindestens eine Überzugsschicht ein harter oder weicher Überzug oder eine Kombination aus hartem und weichem Überzug ist und Dextrin enthält.

19. Verfahren zum Herstellen des Süßwarenprodukts nach Anspruch 1, das die folgenden Schritte umfasst:
a) Bereitstellen eines gelatinefreien Kausüßigkeits-Süßwarenmaterials, das Saccharose, Glukosesirup, Dextrin und Gellan umfasst, wobei das Verhältnis Saccharose/Glukosesirup im Bereich von 70:30 bis 99:1 auf Trockengewichtsbasis liegt, wobei mindestens 80 % der Saccharose in dem Kausüßigkeits-Süßwarenmaterial in kristallklarem Zustand ist;
b) Bereitstellen eines Süßigkeitsmaterials, das amorphe Saccharose, Glukosesirup und Dextrin umfasst, wobei das Verhältnis Saccharose/Glukosesirup im Bereich von 70:30 bis 99:1 auf Trockengewichtsbasis liegt, wobei 80 % bis 99,9 % der Saccharose in dem harten Süßigkeits-Süßwarenmaterial in amorpher Form vorliegen
c) Kombinieren des Kausüßwarenmaterials und des Süßigkeitsmaterials, so dass das Süßigkeitsmaterial einen Kern aus Kausüßwarenmaterial umgibt:
d) Ermöglichen, dass die amorphe Saccharose des Süßigkeitsmaterials zumindest teilweise kristallisiert.

## Revendications

1. Produit de confiserie incluant un centre à mâcher sans gélatine comprenant du saccharose, du sirop de glucose, de la dextrine et du gellan, une couche comprenant un matériau de bonbon amorphe entourant ledit centre à mâcher, où le matériau de bonbon amorphe comprend du saccharose, du glucose et de la dextrine, où le rapport saccharose/sirop de glucose dans la couche comprenant le matériau de bonbon amorphe est compris entre 70:30 à 99:1 sur la base du poids sec, et où le rapport saccharose/sirop de glucose dans le centre à mâcher est compris entre 70:30 à 99:1 sur la base du poids sec.

2. Produit de confiserie selon la revendication 1, où la quantité de gomme gellane dans le centre à mâcher est comprise entre 0,02 % et 1 % en poids par rapport au poids total du centre à mâcher.

3. Produit de confiserie selon l'une quelconque des revendications précédentes, où la teneur en humidité dans le centre à mâcher est comprise entre 6 % et 10 % en poids par rapport au poids total du centre à mâcher.

4. Produit de confiserie selon l'une quelconque des revendications précédentes, où le centre à mâcher sans gélatine ne contient pas de gomme arabique.

5. Produit de confiserie selon l'une quelconque des revendications précédentes, où la teneur en humidité de la couche de bonbon partiellement amorphe est de préférence comprise entre 4 % à 8 % en poids par rapport au poids total de la couche de bonbon amorphe.

6. Produit de confiserie selon l'une quelconque des revendications précédentes, où la dextrine représente plus de 10 % du centre à mâcher.

7. Produit de confiserie selon l'une quelconque des revendications précédentes, où la dextrine représente de 15 % à 70 % du centre à mâcher.

8. Produit de confiserie selon l'une quelconque des revendications précédentes, où la dextrine représente plus de 10 % du matériau de bonbon amorphe.

9. Produit de confiserie selon l'une quelconque des revendications précédentes, où la dextrine représente de 15 % à 70 % du matériau de bonbon amorphe.

10. Produit de confiserie selon l'une quelconque des revendications précédentes où ladite dextrine contient moins de 5 % des mono et disaccharides totaux.

11. Produit de confiserie selon les revendications 1 à 4, 6 à 7 où ledit centre à mâcher contient du sorbitol pour plus de 2 % en poids du matériau à mâcher.

12. Produit de confiserie selon les revendications 1 à 4, 6 à 7 où ledit centre à mâcher contient de la glycérine de 0,04 % à 5 % en poids du matériau à mâcher.

13. Produit de confiserie selon les revendications 1 ou 5 où ledit matériau de bonbon amorphe contient du sorbitol pour plus de 2 % en poids du matériau à mâcher.

14. Produit de confiserie selon la revendication 5 où ledit matériau de bonbon amorphe contient de la glycérine de 0,04 % à 5 % en poids du matériau à mâcher.

15. Produit de confiserie selon les revendications 1 à 14 où le centre à mâcher ou le matériau de bonbon amorphe ne contient pas de goût.

16. Produit de confiserie selon les revendications 1 à 14 où le centre à mâcher et le matériau de bonbon amorphe ne contiennent pas de goût.

17. Produit de confiserie selon l'une quelconque des revendications précédentes comprenant en outre au moins une couche d'enrobage.

18. Produit de confiserie selon l'une quelconque des revendications précédentes où l'au moins une couche d'enrobage est un enrobage dur ou mou ou une combinaison d'enrobage dur et mou et contient de la dextrine.

19. Méthode de fabrication du produit de confiserie comme défini dans la revendication 1 comprenant les étapes de :
a) fournir un matériau de bonbon de confiserie à mâcher sans gélatine comprenant du saccharose, du sirop de glucose, de la dextrine et du gellan où le rapport saccharose/sirop de glucose est compris entre 70:30 et 99:1 sur la base du poids sec, où au moins 80 % du saccharose dans le matériau de bonbon de confiserie à mâcher est à l'état cristallin ;
b) fournir un matériau de bonbon comprenant du saccharose amorphe, du sirop de glucose et de la dextrine où le rapport saccharose/sirop de glucose est compris entre 70:30 et 99:1 sur la base du poids sec, où de 80 % à 99,9 % du saccharose dans le matériau de bonbon de confiserie dur est sous forme amorphe.
c) combiner le matériau de confiserie à mâcher et le matériau de bonbon de sorte que le matériau de bonbon entoure un noyau de matériau de confiserie à mâcher.
d) permettre au saccharose amorphe du matériau de bonbon de se cristalliser au moins partiellement.
